# EUROPÄISCHE PATENTANMELDUNG

(11) **EP 4 098 972 A1**
(43) Veröffentlichungstag der Anmeldung: **07.12.2022**
(21) Anmeldenummer: 22176250.3
(22) Anmeldetag: 30.05.2022
(51) Int. Cl.: G01B 11/26, G01B 11/30

(54) **VERFAHREN ZUR BESTIMMUNG DER EBENHEIT UND DER ORIENTIERUNG EINER FLÄCHE**

(30) Priorität: 31.05.2021 DE 102021113970
(71) Anmelder: DIQ Zert GmbH, 66111 Saarbrücken (DE)
(72) Erfinder: Schuler, Peter, 66679 Losheim am See (DE); Schuler, Stefan, 66679 Losheim am See (DE); Koch, Thomas, 54338 Schweich (DE); Gauer, Ruben, 66346 Püttlingen (DE); Seiler, Artur, 66663 Merzig (DE)
(74) Vertreter: Patentanwaltskanzlei Vièl & Wieske PartGmbB

(57) **Zusammenfassung**

Die vorliegende Erfindung betrifft ein Verfahren zur Bestimmung der Ebenheit und der Orientierung einer Fläche (101). Die Orientierung eines Flächenelementes (107) wird mittels einer Messeinrichtung (103) vermessen. Das Flächenelement (107) ist Bestandteil eines separaten Bauteils (102). Die Orientierung zumindest eines Teils der Fläche (101) wird relativ zu dem Flächenelement (107) gemessen. Nach der vorliegenden Erfindung sind auf dem Bauteil (102) Markierungen aufgebracht. Mittels eines photogrammetrischen Messverfahrens wird die Ebenheit der Fläche (101) ermittelt. Dazu wird zumindest ein Teil der Fläche (101) durch eine oder mehrere fotografische Aufnahmen des gesamten Teils der Fläche (101) mit einem photogrammetrischen Messverfahren vermessen. Außerdem wird mittels eines photogrammetrischen Messverfahrens eine Auswertung der Markierungen auf dem Bauteil (102) vorgenommen. Die Orientierung der Fläche (101) relativ zur Orientierung des Flächenelementes wird ermittelt durch die Relation der Ergebnisse der beiden photogrammetrischen Messverfahren.

## Beschreibung

Die vorliegende Erfindung betrifft ein Verfahren zur Bestimmung der Ebenheit und der Orientierung einer Fläche nach dem Oberbegriff des Anspruchs 1.

Zur Prüfung der Ebenheit und der Neigung einer Fläche ist es bekannt, eine Richtlatte zu verwenden, die in einem Teilbereich der zu prüfenden Fläche aufgelegt wird. Die Größe des Teilbereiches der zu prüfenden Fläche entspricht der Größe der Fläche der Richtlatte auf der Seite, mit der die Richtlatte aufgelegt wird. Die Richtlatte ist im Allgemeinen quaderförmig und hat insbesondere in der Auflagefläche der Richtlatte eine hohe Ebenheit mit geringen Toleranzen.

Wenn die Richtlatte in dem Teilbereich auf die zu prüfende Fläche aufgelegt wird, liegen zumindest zwei Punkte der Richtlatte in dem Teilbereich auf der zu prüfenden Fläche auf. Jeder Punkt in diesem Teilbereich der Fläche hat ein sogenanntes Stichmaß der Ebenheit der Fläche. Dieses Stichmaß der Ebenheit der Fläche ist für die einzelnen Punkte in dem Teilbereich definiert als der Abstand des jeweiligen Punktes von der Seite der Richtlatte, mit der die Richtlatte aufgelegt ist.

Zur Bestimmung der Orientierung der Fläche gegenüber einer horizontalen Fläche ist ebenfalls ein Stichmaß definiert. Es handelt sich dabei um das Stichmaß der Orientierung der Fläche. Dieses Stichmaß der Orientierung der Fläche wird bestimmt, indem die Richtlatte zunächst in dem Teilbereich der Fläche aufgelegt wird. Es werden dann die beiden Unterkanten der Richtlatte betrachtet, die sich jeweils als gemeinsame Kante einer der beiden Stirnflächen mit der Auflagefläche der Richtlatte ergeben. Bevor die Richtlatte um die höherliegende der beiden Unterkanten gedreht wird, wird die Position der anderen Unterkante in vertikaler Richtung gemessen. Daran anschließend wird die Richtlatte um die höherliegende Unterkante gedreht, bis die Auflagefläche der Richtlatte horizontal orientiert ist. Es wird dann die Änderung der Position der anderen Unterkante in vertikaler Richtung gemessen gegenüber der Orientierung der Richtlatte, wenn diese in dem Teilbereich auf der Fläche aufliegt. Diese Änderung der Position der anderen Unterkante ist das Stichmaß für die Orientierung des Teilbereichs der Fläche.

Die Messung der horizontalen Orientierung der Richtlatte kann beispielsweise mittels einer Wasserwaage erfolgen.

Durch ein Aufsetzen der Richtlatte in unterschiedlichen Teilbereichen der Fläche lässt sich eine Aussage über die Ebenheit und die Orientierung der Fläche insgesamt treffen.

Es ist eine alternative Vorgehensweise bekannt zu der beschriebenen Vorgehensweise. Um zu prüfen, ob eine direkte Verbindungslinie (die ggf. nur "gedacht ist") zwischen zwei Punkten horizontal verläuft, kann auch eine sogenannte Schlauchwasserwaage verwendet werden. Diese Vorgehensweise ist besonders dann sinnvoll, wenn die beiden Punkte einen größeren Abstand voneinander aufweisen.

Der vorliegenden Erfindung liegt die Aufgabe zu Grunde, ein Verfahren vorzuschlagen, mit dem eine Prüfung einer Fläche auf deren Ebenheit und Orientierung mit geringem Aufwand möglich wird.

Diese Aufgabe wird nach der vorliegenden Erfindung gemäß Anspruch 1 gelöst durch das dort beschriebene Verfahren zur Bestimmung der Ebenheit und der Orientierung einer Fläche. Die Ebenheit und die Orientierung eines Flächenelementes wird mittels einer Messeinrichtung vermessen. Das Flächenelement ist Bestandteil eines separaten Bauteils. Die Ebenheit und die Orientierung eines Teils der Fläche wird relativ zu dem Flächenelement gemessen.

In dem eingangs beschriebenen Stand der Technik ist das Flächenelement die Auflagefläche der Richtlatte. Die Richtlatte ist bei dem beschriebenen Stand der Technik das separate Bauteil. Die Orientierung des Teilbereichs der Fläche, in dem beim Stand der Technik die Richtlatte auf der Fläche aufliegt, wird in der eingangs beschriebenen Weise über das Stichmaß der Orientierung mittels der Richtlatte vermessen. Die Orientierung der Richtlatte kann mit einer Wasserwaage vermessen werden. Dieses Stichmaß liefert auch eine Aussage über die Ebenheit der Fläche.

Nach der vorliegenden Erfindung sind auf dem Bauteil Markierungen aufgebracht. Mittels photogrammetrischer Messverfahren wird die Ebenheit und die Orientierung der Fläche ermittelt. Dazu wird die gesamte Fläche oder ein Teil der Fläche als Sollfläche definiert. Mit einem photogrammetrischen Messverfahren wird die Sollfläche durch Auswertung einer oder mehrerer fotografischer Aufnahmen der gesamten Fläche der Sollfläche vermessen. Durch die Auswertung dieses photogrammetrischen Messverfahrens erfolgt die Bestimmung der Ebenheit der Sollfläche. Außerdem wird mittels eines photogrammetrischen Messverfahrens eine Auswertung der Markierungen auf dem Bauteil vorgenommen. Die Orientierung der Sollfläche relativ zur Orientierung des Flächenelement wird durch die Relation der Ergebnisse der beiden photogrammetrischen Messverfahren ermittelt.

Abhängig von dem Öffnungswinkel der fotografischen Aufnahmen bei dem photogrammetrischen Messverfahren kann mit einer fotografischen Aufnahme die gesamte zu vermessende Fläche erfasst werden oder lediglich ein Teil der zu vermessenden Fläche. Davon abhängig wird die Sollfläche definiert. Wenn die Sollfläche so definiert wird, dass lediglich ein Teil der zu vermessenden Fläche die Sollfläche bildet, werden mehrere photogrammetrische Messverfahren durchgeführt, so dass die gesamte zu vermessende Fläche durch die nacheinander als jeweilige Sollflächen vermessenen Teile der Fläche zusammensetzbar ist. Vorteilhaft haben die Sollflächen der aufeinander folgenden photogrammetrischen Messverfahren eine Überlappung.

Die Markierungen auf dem Bauteil dienen dazu, die Orientierung des Flächenelementes mittels des photogrammetrischen Messverfahrens zu messen. Hierzu müssen die Markierungen auf dem Bauteil eindeutig positioniert sein. Außerdem müssen die Markierungen in den fotografischen Bildaufnahmen des photogrammetrischen Messverfahrens erkennbar sein. Das Bauteil kann nach der vorliegenden Erfindung beispielsweise ein scheibenförmiges Bauteil sein, bei dem die Oberseite (Oberfläche) das Flächenelement bildet. Das Bauteil kann auch eine komplexere 3D-Struktur aufweisen. Das Flächenelement im Sinne des Anspruchs 1 kann in diesem Fall als eine Schnittfläche durch dieses Bauteil definiert sein.

Die Markierungen können codiert oder ggf. auch uncodiert sein. Die Verwendung von codierten Markierungen hat den Vorteil, dass bei der Auswertung der photogrammetrischen Bildaufnahmen eine leichtere Zuordnung der Markierungen möglich ist. Insbesondere ist diese Zuordnung auch automatisierbar in einem Verfahren der automatischen Bildauswertung. Wenn die Markierungen bereits durch deren Position in der Bildaufnahme eindeutig definierbar und erkennbar sind, ist es nicht notwendig, die Markierungen zu codieren. Die Markierungen können beispielsweise durch Aufdrucken oder Aufkleben auf dem Bauteil angebracht werden.

Das photogrammetrische Messverfahren kann beispielsweise ein stereophotogrammetrisches Messverfahren sein.

Es wird aus einer oder mehreren fotografischen Aufnahmen bestimmt, inwieweit die einzelnen Punkte auf der Fläche in einer Ebene liegen. Darüber wird die Ebenheit der Fläche bestimmt. Ob eine oder mehrere fotografische Aufnahmen verwendet werden, hängt von dem photogrammetrischen Messverfahren ab. Bei einem stereophotogrammetrischen Messverfahren werden zwei fotografische Aufnahmen aus verschiedenen Aufnahmerichtungen erstellt.

Damit können mit einem Messvorgang alle Punkte der fotografierten Fläche bewertet werden zur Bestimmung der Ebenheit der Fläche.

Die Orientierung der Fläche wird bestimmt durch das Ergebnis dieses photogrammetrischen Messverfahrens in Relation zu dem Ergebnis eines photogrammetrischen Messverfahrens zur Vermessung der Markierungen auf dem Bauteil.

Entsprechend dem Anspruch 2 können ebenfalls Markierungen auf der Fläche angebracht werden. Es geht in diesem Fall bei der Auswertung um die Punkte der Fläche, die zwischen diesen Markierungen liegen oder auch auf diesen Markierungen. Über die gemeinsame Aufnahme der entsprechenden Punkte der Fläche mit den Markierungen lässt sich die Position der einzelnen Punkte mittels der photogrammetrischen Messverfahren ermitteln. Damit lässt sich die Ebenheit der Fläche bestimmen, indem durch die Auswertung der photogrammetrischen Messverfahren für eine große Zahl von Punkten die Position in vertikaler Richtung bestimmt werden kann, wenn die Fläche horizontal ausgerichtet ist. Für die Bestimmung der Ebenheit der Fläche ist es ausreichend, die Position der Punkte in vertikaler Richtung relativ zueinander zu bestimmen.

Wenn die Fläche entsprechend strukturiert ist, so dass die Position der einzelnen natürlichen Punkte relativ zu Strukturen in der Fläche bestimmt werden kann, ist es nicht unbedingt erforderlich, auf der zu prüfenden Fläche Markierungen anzubringen.

Aus der Auswertung der photogrammetrischen Messverfahren der Fläche lässt sich weiterhin ableiten, wie die Fläche orientiert ist relativ zur Orientierung des Flächenelementes. Hierzu wird ausgewertet, wie die sich aus den vermessenen Punkten der Fläche ergebende Orientierung der Fläche ausgerichtet ist relativ zu dem Flächenelement. Die Orientierung des Flächenelementes ergibt sich aus den Markierungen auf dem Bauteil und der Definition des Flächenelementes relativ zu den Markierungen auf dem Bauteil.

In einem Koordinatensystem ist eine Fläche definiert durch deren Position und die Orientierung. Wenn mehrere Flächen dieselbe Orientierung haben, stimmen die Flächen überein, wenn sie dieselbe Position haben. Wenn diese Flächen nicht dieselbe Position haben, sind die Flächen parallel.

Für den hier vorliegenden Anwendungsfall geht es darum, zu bestimmen, ob eine Fläche in einem gewissen Toleranzbereich horizontal verläuft. Es geht also darum, zu bestimmen, ob die Fläche in einem x-y-z-Koordinatensystem, bei dem die x-Achse und die y-Achse die horizontale Ebene aufspannen, einen Nickwinkel aufweist und/oder einen Rollwinkel (Wankwinkel). Ein Gierwinkel der Fläche ist für den vorliegenden Anwendungsfall nicht von Interesse.

Durch das Verfahren nach Anspruch 1 wird vorteilhaft mit einem geringen Aufwand bei der Messung und Auswertung eine Aussage über die Lage einer größeren Zahl von Punkten auf der Fläche möglich. Vorteilhaft kann damit eine Aussage über die Fläche insgesamt getroffen werden. Dies betrifft sowohl die Ebenheit der Fläche sowie auch die Orientierung der Fläche.

Gegenüber dem Stand der Technik erweist es sich hierbei als vorteilhaft, dass die Auswertung einer großen Zahl von Punkten der Fläche erfolgen kann, ohne dass die Messung und Auswertung lange dauert. Bei der Vorgehensweise nach dem Stand der Technik ist es erforderlich, die Richtlatte wiederholt an verschiedenen Positionen aufzulegen, um unterschiedliche Teilbereiche der Fläche vermessen zu können.

Anspruch 2 betrifft eine Ausgestaltung des Verfahrens, bei dem auch auf der zu vermessenden Fläche Markierungen angebracht sind.

Auch diese Markierungen können entsprechend der obigen Beschreibung im Zusammenhang mit den Markierungen auf dem Flächenelement codiert oder uncodiert sein.

Bei der Ausgestaltung des Verfahrens gemäß Anspruch 3 wird das Flächenelement ausgerichtet.

Im Allgemeinen ist es für das vorliegende Verfahren nicht notwendig, dass das Flächenelement horizontal orientiert ist. Es genügt, wenn die Orientierung des Flächenelementes bekannt ist. Ist beispielsweise bekannt, dass das Flächenelement einen bestimmten Neigungswinkel gegenüber einer horizontalen Ebene hat, kann die Orientierung der Fläche wie folgt bestimmt werden.
➢ Die Bestimmung der Orientierung der Fläche wird relativ zur Orientierung des Flächenelementes vorgenommen.
➢ Wenn die Orientierung des Flächenelementes relativ zu einer horizontalen Ebene bekannt ist, lässt sich daraus auch die Orientierung der Fläche relativ zu der horizontalen Ebene ableiten.

Die Ausrichtung des Flächenelementes kann beispielsweise erfolgen, indem das Bauteil Nivellierschrauben aufweist oder hydraulische oder pneumatische Stellelemente oder Keile, über die das Bauteil ausgerichtet wird.

Bei der Ausgestaltung nach Anspruch 4 wird für das photogrammetrische Messverfahren der zu vermessenden Fläche die zu vermessende Fläche in mehrere Teile dieser Fläche eingeteilt. Um die Fläche "zusammenzusetzen", werden mehrere dieser photogrammetrischen Messverfahren ausgeführt. Dabei sind die Teile der Fläche so definiert, dass die Fotos dieser Teile in Längs- und Querrichtung der zu vermessenden Fläche eine Überlappung zwischen 30% und 90% aufweisen, dabei bevorzugt zwischen 60% und 80%.

Es hat sich beispielsweise gezeigt, dass die Vermessung einer Gesamtfläche von 20 bis 25,5 m², die beispielsweise eine Breite von 3 bis 4 m aufweisen kann und entsprechend eine Länge von 5 bis 8,50 m, mit ca. 200 Aufnahmen von jeweils einem Flächenteilsegment vermessen werden kann. Dabei hat es sich als besonders vorteilhaft erwiesen, wenn die Fotos in Längs- und Querrichtung eine Überlappung zwischen 60% und 80% aufweisen. Es ist grundsätzlich auch möglich, die Zahl der Aufnahmen zu reduzieren, wenn die Überlappung der Fotos reduziert wird. Geeignete Werte können für die Überlappung zwischen 30% und 90% liegen.

Ein Ausführungsbeispiel der Erfindung ist in der Zeichnung dargestellt. Es zeigt dabei:
- Fig. 1:: eine Perspektivansicht einer zu vermessenden Fläche mit einem Flächenelement sowie der Kameraanordnung zur Durchführung der Fotoaufnahmen und
- Fig. 2:: eine Draufsicht auf die zu vermessende Fläche mit einer strichlinierten Darstellung sich überdeckender Aufnahmen von Teilbereichen der Fläche.

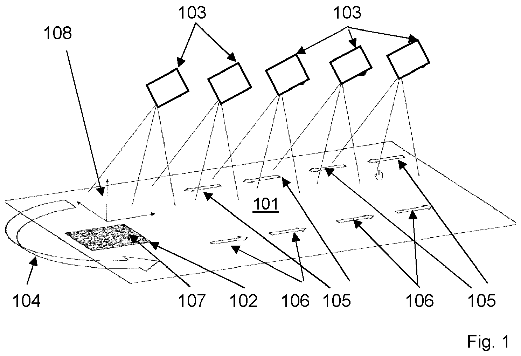

Figur 1 zeigt eine Perspektivansicht einer zu vermessenden Fläche 101 mit einem Flächenelement 102 sowie der Kameraanordnung 103 zur Durchführung der Fotoaufnahmen.

In der Darstellung der Figur 1 ist eine Kamera 103 vorhanden, die sich relativ zur Fläche 101 an unterschiedlichen Positionen befindet, um mehrere Aufnahmen der Fläche 101 zu machen.

In dem dargestellten Ausführungsbeispiel besteht die Fläche aus zwei nebeneinander angeordneten Fahrspuren, entlang derer ein Fahrzeug fährt bzw. auf denen die Räder eines Fahrzeugs aufstehen, wenn Messungen an dem Fahrzeug durchgeführt werden. Diese beiden Fahrspuren sind durch die Pfeile 105 sowie 106 symbolisiert. Die Richtung der Pfeile zeigt an, in welche Richtung in dem dargestellten Ausführungsbeispiel die Position der Kamera 103 verändert wird, um jeweils mehrere Aufnahmen der beiden Fahrspuren zu machen.

Es ist weiterhin ein Pfeil 104 zu sehen. Dieser Pfeil symbolisiert, dass die Kamera 103 am Ende der einen Fahrspur (105) in ihrer Aufnahmerichtung umgedreht und dann entlang der zweiten Fahrspur (106) bewegt wird, um dann auch Aufnahmen dieser Fahrspur zu machen.

Die Darstellung zeigt somit eine Ausgestaltung, bei der mehrere Aufnahmen gemacht werden, indem eine Kamera 103 verwendet wird, deren Position zwischen den Aufnahmen geändert wird.

Es ist grundsätzlich auch möglich, mehrere Kameras vorzusehen, mit denen entsprechend mehrere Aufnahmen gemacht werden können, ohne die Position der Kamera zu ändern.

In der Darstellung der Figur 1 ist auch zu sehen, dass ein Bauteil 102 vorhanden ist. Auf diesem Bauteil 102 ist ein Flächenelement 107 als flächige Markierung auf dem Bauteil 102 angebracht. Dieses Flächenelement 107 stellt eine Referenz dar in dem Sinne, dass die Orientierung dieses Flächenelementes 107 bekannt ist. Dieses Flächenelement 107 wird in mehreren Positionen der Kamera 103 photogrammetrisch erfasst und vermessen. Die anderen Aufnahmen der Fläche 101 können damit in Relation zur photogrammetrischen Erfassung des Flächenelementes 107 ausgewertet werden. Die Positionen der Kamera 103 können bei den Aufnahmen zueinander bekannt sein sowie auch die Richtungen der Öffnungswinkel, unter denen die Kamera 103 jeweils das Bild aufnimmt. Es ist wegen der Überlappung der Teilbereiche der Fläche, die bei unterschiedlichen Positionen der Kamera aufgenommen werden, auch möglich, aus der Aufnahme der Kamera selbst die jeweilige Position der Kamera sowie die Richtung des Öffnungswinkels zu bestimmen, unter dem die Kamera 103 jeweils das Bild aufgenommen hat.

Mit der Bezugsziffer 108 ist ein Koordinatensystem bezeichnet. Bei diesem Koordinatensystem 108 erstreckt sich die z-Achse senkrecht aus der Fläche 101 nach oben. Die x-Achse erstreckt sich parallel zur längeren Seite der rechteckigen Fläche 101, die y-Achse erstreckt sich parallel zur kürzeren Seite der rechteckigen Fläche 101.

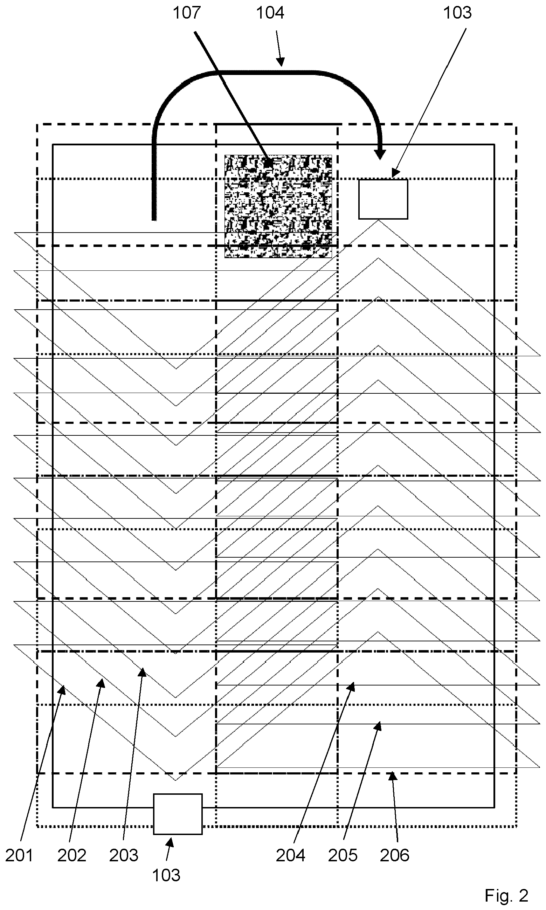

Figur 2 zeigt eine Draufsicht auf eine zu vermessende Fläche mit einer Darstellung sich überdeckender Aufnahmen von Teilbereichen der Fläche. Die sich überlappenden Bereiche ergeben sich wie folgt.

Es sind Begrenzungslinien 201, 202, 203 fotografischer Aufnahmen markiert. Diese fotografischen Aufnahmen werden in verschiedenen Positionen der Kamera 103 entlang der linken Fahrspur gemacht. Es ist zu sehen, dass in einer Vielzahl weiterer Position der Kamera 103 weitere Aufnahmen gemacht wurden.

Dabei ist ersichtlich, dass sich die Teilbereiche der Fläche, die jeweils bei einer der fotografischen Aufnahmen aufgenommen wurden, mit Teilbereichen der Fläche überlappen, die jeweils bei einer anderen fotografischen Aufnahme aufgenommen wurden. Diese Überlappung der Teilbereiche der Fläche erfolgt dabei in dem dargestellten Ausführungsbeispiel nicht lediglich "paarweise" bei zwei Aufnahmen, sondern vielmehr so, dass sich die mehr als zwei Teilbereiche der Flächen überlappen, die bei mehr als zwei fotografischen Aufnahmen aufgenommen wurden.

In dem dargestellten Ausführungsbeispiel ist zu sehen, dass die mit den Bezugsziffern 201, 202 und 203 markierten Teilbereiche unterschiedlicher fotografischer Aufnahmen einen gemeinsamen Bereich haben, in dem sich die Teilbereiche dieser drei fotografischen Aufnahmen überlappen.

Es ist zu sehen, dass sich auch im weiteren Verlauf der linken Fahrspur die fotografischen Aufnahmen überlappen.

Bei den fotografischen Aufnahmen der rechten Fahrspur sind die Teilbereiche 204, 205 und 206 mit Bezugszeichen versehen. Diese Bezugszeichen gehen hier zu den Begrenzungslinien, die die "vordere Kante" der jeweiligen fotografischen Aufnahme bilden. Es handelt sich dabei um die Schnittlinie des Öffnungswinkels der Kamera bei der Aufnahme mit der Fläche. Es ist zum einen wieder zu sehen, dass diese Teilbereiche 204, 205, 206 einen gemeinsamen Bereich haben, in dem sich alle drei Teilbereiche überlappen.

Außerdem ist zu sehen, dass sich auch die fotografischen Aufnahmen der linken Fahrspur und der rechten Fahrspur überlappen.

In der Darstellung der Figur 2 sind gegenüber der Darstellung der Figur 1 die Bewegungsrichtungen der Kamera 103 zwischen den einzelnen Aufnahmen entlang der beiden Fahrspuren unterschiedlich orientiert. Dies gilt dann auch entsprechend für den Pfeil 104. Das Prinzip der Durchführung der fotografischen Aufnahmen und der Überlappung der Teilbereiche unterschiedlicher fotografischer Aufnahmen ist dennoch ersichtlich.

## Patentansprüche

1. Verfahren zur Bestimmung der Ebenheit und der Orientierung einer Fläche (101),
> wobei die Ebenheit und die Orientierung eines Flächenelementes (107) mittels einer Messeinrichtung (103) vermessen wird,
> wobei das Flächenelement (107) Bestandteil eines separaten Bauteils (102) ist,
> wobei die Ebenheit die Orientierung zumindest eines Teils der Fläche (101) relativ zu dem Flächenelement (107) gemessen wird,
**dadurch gekennzeichnet**,
➢ dass auf dem Bauteil (102) Markierungen aufgebracht sind,
➢ dass mittels photogrammetrischer Messverfahren die Ebenheit und die Orientierung der Fläche (101) ermittelt wird,
> indem die Fläche (101) oder zumindest ein Teil der Fläche (101) als Sollfläche festgelegt wird,
> indem mit einem photogrammetrischen Messverfahren die Sollfläche durch Auswertung einer oder mehrerer fotografischer Aufnahmen der gesamten Fläche der Sollfläche vermessen wird,
➢ wobei die Bestimmung der Ebenheit der Sollfläche durch die Auswertung dieses photogrammetrischen Messverfahrens erfolgt, und
> indem mittels eines photogrammetrischen Messverfahrens eine Auswertung der Markierungen auf dem Bauteil (102) vorgenommen wird,
➢ wobei die Orientierung der Sollfläche relativ zur Orientierung des Flächenelementes ermittelt wird durch die Relation der Ergebnisse der beiden photogrammetrischen Messverfahren.

2. Verfahren nach Anspruch 1,
**dadurch gekennzeichnet, dass** auf der Fläche (101), deren Ebenheit und Orientierung zu bestimmen ist, Markierungen aufgebracht sind.

3. Verfahren nach Anspruch 1 oder 2,
**dadurch gekennzeichnet, dass** das Flächenelement (102, 107) ausgerichtet wird.

4. Verfahren nach einem der Ansprüche 1 bis 3,
**dadurch gekennzeichnet**,
➢ dass für das photogrammetrische Messverfahren der zu vermessenden Fläche die zu vermessende Fläche in mehrere Teile dieser Fläche (101) eingeteilt wird,
➢ dass zu jedem der Teile dieser Fläche (101) als Sollfläche ein photogrammetrisches Messverfahren zur Vermessung des Teils der Fläche (101) durchgeführt wird,
➢ dass die Teile dieser zu vermessenden Fläche (101) so definiert sind, dass die Fotos der photographischen Messverfahren der Teile der zu vermessenden Fläche (101) in Längs- und Querrichtung der zu vermessenden Fläche (101) eine Überlappung zwischen 30% und 90% aufweisen, dabei bevorzugt zwischen 60% und 80%.
